# EUROPÄISCHE PATENTSCHRIFT

(11) **EP 1 647 893 B1**
(45) Veröffentlichungstag und Bekanntmachung des Hinweises auf die Patenterteilung: **09.06.2010**
(21) Anmeldenummer: 05108457.2
(22) Anmeldetag: 15.09.2005
(51) Int. Cl.: G06F 13/00, F02D 41/24

(54) **Vorrichtung und Verfahren zur Übertragung von Datensätzen an eine Anzahl unabhängiger Endgerätegruppen**
Apparatus and method for transferring data sets to a plurality of independent terminal groups
Dispositif et procédé de transfert des ensembles de données à plusieurs groupes indépendants de terminaux

(30) Priorität: 28.09.2004 DE 102004046883
(43) Veröffentlichungstag der Anmeldung: 19.04.2006
(73) Patentinhaber: ROBERT BOSCH GMBH, 70442 Stuttgart (DE)
(72) Erfinder: Woerz, Alexandra, 71701, Schwieberdingen (DE)

(56) Entgegenhaltungen:
- DE-A1- 3 515 040
- US-A- 4 279 015
- US-A- 5 794 165
- US-A- 6 026 032
- BREITZMAN: "Development of a custom microprocessor for automotive control" IEEE CONTROL SYSTEMS MAGAZINE, Mai 1985 (1985-05), Seiten 23-28, XP008090450 Stevenage, GB

## Beschreibung

### STAND DER TECHNIK

Die vorliegende Erfindung betrifft eine Vorrichtung und ein Verfahren zur Übertragung von Datensätzen an eine Anzahl N unabhängiger Endgerätegruppen, wobei eine Endgerätegruppe K abhängige Endgeräte aufweist.

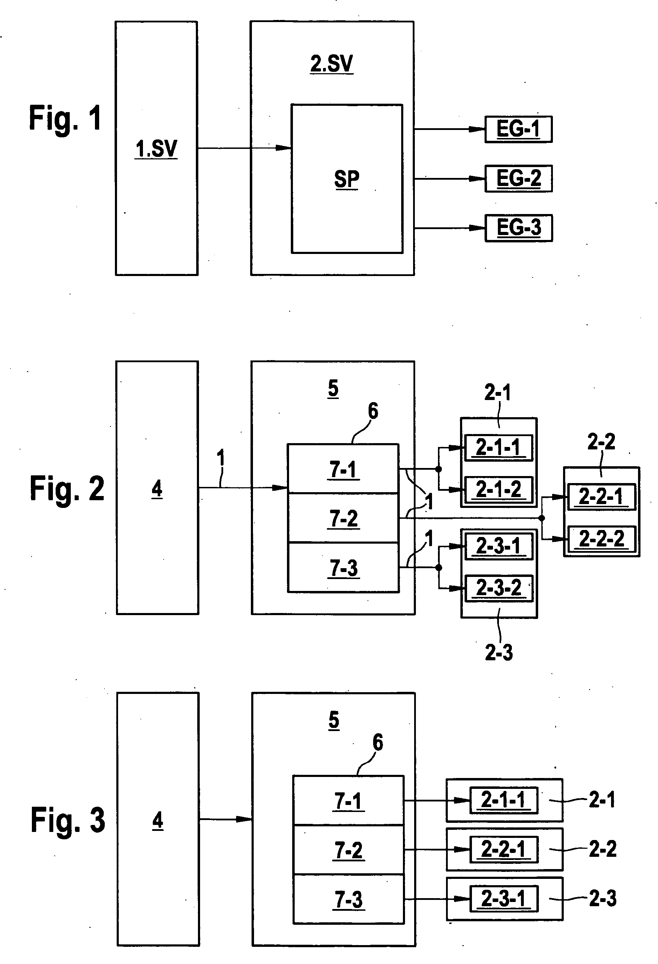

FIG. 1 zeigt ein schematisches Blockschaltbild einer Vorrichtung zur Übertragung von Datensätzen an unabhängige Endgerätegruppen nach dem Stand der Technik. Die Endgeräte der Endgerätegruppen EG sind beispielsweise als Einspritzvorrichtungen für Motoren der Kfz-Industrie ausgebildet. An diese sind Datensätze, welche Steuerinformationen für diese Endgeräte beinhalten, zu übertragen. Solche Steuerinformationen können den Startwinkel der Einspritzung und Daten zur Impulsformung beinhalten. Die Vorrichtung nach dem Stand der Technik gemäß FIG. 1 weist eine erste Steuervorrichtung 1.SV auf, welche die Datensätze für die Endgerätegruppen EG; EG-1, ..., EG-3 berechnet und diese Datensätze einer zweiten Steuervorrichtung 2.SV bereitstellt. Die zweite Steuervorrichtung 2.SV weist einen Speicher SP auf, in welchem die Datensätze in n Speicherplätzen gespeichert werden. Die erste Steuervorrichtung 1.SV durchsucht den Speicher SP nach einem freien Speicherplatz, um einen Datensatz dort zu speichern. Um einen Datensatz an eines der Endgeräte der jeweiligen Endgerätegruppe EG-1, ..., EG-3 zu übertragen, hat die zweite Steuervorrichtung 2.SV den Speicher SP nach dem Datensatz zu durchsuchen, welcher als nächstes an das entsprechende Endgerät der entsprechenden Endgerätegruppe EG-1, ..., EG-3 zu übertragen ist. Nachteilig ist, dass das Durchsuchen des Speichers nach einem freien Speicherplatz und das Suchen des nächsten auszugebenden Datensatzes jeweils Zeit beansprucht, so dass zwei Datensätze an ein entsprechendes Endgerät nur mit erheblicher Latenzzeit übertragen werden können. Des Weiteren ist ein Nachteil dieser bekannten Vorrichtung, dass zwei Datensätze an unterschiedliche, unabhängige Endgerätegruppen EG nicht zeitgleich übertragen werden können.

Die Druckschrift US 4 279 015 A betrifft ein Datenverarbeitungsverfahren zur binären Ausgabe von Daten unter Nutzung eines zeitlich sortierten FIFO-Stapelspeichers. Dabei umfasst der FIFO-Stapelspeicher einen Eingabe-Stapelspeicher und einen Ausgabe-Stapelspeicher mit jeweils sechs Steckplätzen zur Dateneingabe und sechs korrespondierenden Steckplätzen zur Zeiteingabe. Dabei ist vorgesehen, dass anhängige Eingabedaten und Eingabezeiten in einem oberen Steckplatz die letzten Informationen sind, die in dem FIFO-Stapelspeicher abgelegt werden. Anhängige Eingabedaten und Eingabezeiten, die am unteren Ende des FIFO-Stapelspeichers gespeichert sind, sind die ersten darin gespeicherten Eingaben. Bei dem Datenverarbeitungsverfahren ist vorgesehen, dass binäre Ausgabedaten bereitgestellt werden und dem Ausgabedatum eine gewünschte Ausgabezeit zugeordnet ist und zumindest ein Bit einer Ausgabeinformation umfasst Bei Umsetzung des Datenverarbeitungsverfahrens werden zunächst Ausgabedaten gemeinsam mit ihren zugeordneten gewünschten Ausgabezeiten in den FIFO-Stapelspeicher eingegeben. Die gewünschten Ausgabezeiten der Ausgabedaten werden innerhalb des FIFO-Stapelspeichers miteinander verglichen. Dabei erfolgt eine zeitliche Sortierung der Eingabedaten.

Ein Verfahren und eine Anordnung zur Steuerung einer Brennkraftmaschine sind aus der Druckschrift DE 35 15 040 A1 bekannt. Bei diesem Verfahren werden ein Zentralrechner, der zur Aufnahme von Betriebsparametern ausgebildet ist, und Endstufen, die unter Berücksichtigung der im Zentralrechner ablaufenden Programme betätigt werden, verwendet. Dabei werden von dem Zentralrechner dessen ausgegebene Werte in einem Zwischenspeicher abgelegt. Diesem Zwischenspeicher sind Endstufenrechner der Endstufen zugeordnet. Außerdem werden den Endstufenrechnern kurbelwellengesteuerte Synchronisier- und Taktimpulse zugeführt. In einem vorgegebenen Kurbelwellen-Winkelfenster fragen die Endstufenrechner die Werte aus dem Zwischenspeicher ab.

### VORTEILE DER ERFINDUNG

Die erfindungsgemäße Vorrichtung mit den Merkmalen des Anspruchs 1 sowie das erfindungsgemäße Verfahren mit den Merkmalen des Anspruchs 8 weisen gegenüber dem bekannten Lösungsansatz den Vorteil auf, dass der Speicherplatz für den nächsten zu speichernden Datensatz und der Speicherplatz des nächsten auszugebenden Datensatz feststeht. Somit entfällt für die erste Steuervorrichtung das Suchen eines freien Speicherplatzes im Speicher und für die zweite Steuervorrichtung entfällt die Suche, welcher Datensatz für die jeweilige Endgerätegruppe als nächstes ausgegeben werden soll. Damit werden Rechenleistung und Rechenzeit eingespart. Somit verringert sich auch die Zeitdifferenz zweier auszugebender Datensätze für ein Endgerät Außerdem wird es durch die erfindungsgemäße Vorrichtung sowie durch das erfindungsgemäße Verfahren ermöglicht, Datensätze für die verschiedenen Endgerätegruppen gleichzeitig zu den entsprechenden Endgeräten zu übertragen.

Vorteilhafterweise erhalten die Steuerbefehle eines Datensatzes Informationen darüber, wann der Datensatz von der zweiten Steuervorrichtung an die entsprechende Endgerätegruppe weitergeleitet werden muss.

Die der vorliegenden Erfindung zugrundeliegende Idee besteht im Wesentlichen darin, eine Vorrichtung zur Übertragung von Datensätzen an eine Anzahl N unabhängiger Endgerätegruppen, wobei eine Endgerätegruppe K abhängige Endgeräte aufweist, wobei N und K natürliche Zahlen ≥ 1 sind, bereitzustellen, wobei die Vorrichtung aufweist:
- die N Endgerätegruppen mit N*K Endgeräten, wobei für jedes der N*K Endgeräte jeweils genau ein vorbestimmter Datensatztyp vorgesehen ist, so dass das jeweilige Endgerät ausschließlich Datensätze des entsprechenden vorbestimmten Datensatztyps empfängt und weiterverarbeitet;
- eine erste Steuervorrichtung, welche die Datensätze der N*K vorbestimmten Datensatztypen berechnet und die Datensätze für die abhängigen Endgeräte einer jeden Endgerätegruppe in der Reihenfolge bereitstellt, in der diese von der entsprechenden Endgerätegruppe abgearbeitet werden müssen und welche auf einen Speicher zugreift, der in einer Anzahl N von unabhängigen Ringspeichern organisiert ist, wobei die erste Steuervorrichtung die Datensätze für die abhängigen Endgeräte der jeweiligen Endgerätegruppe in einem vorbestimmten Ringspeicher der Mehrzahl N der Ringspeicher zwischenspeichert; und
- eine zweite Steuervorrichtung, welche jeweils den ältesten zwischengespeicherten Datensatz des jeweiligen Ringspeichers nach den im Datensatz enthaltenen Informationen von Steuerbefehlen an das entsprechende Endgerät der Endgerätegruppe überträgt.

Erfindungsgemäß ist weiter ein Verfahren zur Übertragung der Datensätze an die Anzahl N unabhängiger Endgerätegruppen, wobei eine Endgerätegruppe K abhängige Endgeräte aufweist, wobei N und K natürliche Zahlen ≥ 1 sind, mit den folgenden Schritten vorgesehen:
a) Bereitstellen jeweils genau eines vorbestimmten Datensatztyps für jedes der N*K Endgeräte, so dass das jeweilige Endgerät ausschließlich Datensätze des entsprechenden vorbestimmten Datensatztyps empfängt;
b) Berechnen der Datensätze für die N*K Datensatztypen;
c) Bereitstellen der Datensätze für die abhängigen Endgeräte einer jeden Endgerätegruppe in der Reihenfolge, in der diese von der entsprechenden Endgerätegruppe und schließlich dem entsprechenden Endgerät abgearbeitet werden;
d) Zwischenspeichern der Datensätze, wobei jeweils die Datensätze für die abhängigen Endgeräte der jeweiligen Endgerätegruppe in einem vorbestimmten Ringspeicher einer Mehrzahl N von Ringspeichern zwischengespeichert wird;
e) Übertragen des jeweils ältesten zwischengespeicherten Datensatzes des jeweiligen Ringspeichers an das entsprechende Endgerät.

In den Unteransprüchen fmden sich vorteilhafte Weiterbildungen und Ausgestaltungen der im Anspruch 1 angegebenen Vorrichtung zur Übertragung von Datensätzen an eine Anzahl N unabhängiger Endgerätegruppen mit jeweils K Endgeräten.

Gemäß einer bevorzugten Weiterbildung speichert die erste Steuervorrichtung jeweils Datensätze von Datensatztypen für die abhängigen Endgeräte der gemeinsamen Endgerätegruppe in einem gemeinsamen Ringspeicher zwischen, so dass ein relativer Abstand der Datensätze für verschiedene Endgeräte, die in dem gemeinsamen Ringspeicher zwischengespeichert werden, maximal ist, wobei der relative Abstand zweier Datensätze verschiedener Endgeräte einer Endgerätegruppe durch den Einsatz des jeweiligen Endgerätes bedingt ist. Ein Vorteil dieser bevorzugten Weiterbildung ist, dass durch das Speichern maximal beabstandeter Datensätze verschiedener Endgeräte in einem gemeinsamen Ringspeicher die notwendige Anzahl vorzusehender Ringspeicher minimiert wird. Dies spart Rechenzeit ein und wirkt sich damit in einer besseren Ausgabegenauigkeit aus. Maximal beabstandet heißt, dass die unterschiedlichen Endgeräte einer Endgerätegruppe ihre Datensätze und die darin beinhalteten Steuerbefehle mit einer maximalen Zeitdifferenz empfangen können, da die Steuerungsaufgaben der unterschiedlichen Endgeräte dieser Endgerätegruppe zeitlich maximal relativ zueinander beabstandet sind. Somit hat es einen positiven Einfluß auf die Geschwindigkeit des Gesamtsystems, Datensätzen verschiedener Datensatztypen in einem gemeinsamen Ringspeicher zu speichern, weil die Steuerbefehle als Paket bzw. als Datensatz gespeichert werden können und der Speicherplatz bekannt ist und somit die Suche nach einem Speicherplatz entfällt.

Gemäß einer weiteren bevorzugten Weiterbildung weist der Ringspeicher eine Anzahl P von Speicherplätzen auf, wobei genau ein Datensatz in genau einem Speicherplatz speicherbar ist, wobei P eine natürliche Zahl ≥ 1 ist.

Gemäß einer weiteren bevorzugten Weiterbildung ist die Anzahl N*K unabhängiger Endgeräte aller Endgerätegruppen und die Anzahl N an Ringspeichern identisch (hier: K=1, ein Endgerät in einer Endgerätegruppe), so dass für jedes einzelne Endgerät ein eigener Ringspeicher vorgesehen ist.

Gemäß einer weiteren bevorzugten Weiterbildung enthält eine Endgerätegruppe ein Endgerät oder mehrere Endgeräte.

Gemäß einer weiteren bevorzugten Weiterbildung ist ein Belegt-Flag in dem Datensatz vorgesehen, welches bei Speicherung des entsprechenden Datensatzes in dem Speicherplatz gesetzt wird, um anzuzeigen, dass der entsprechende Speicherplatz belegt ist. Ein Vorteil dieser bevorzugten Weiterbildung ist, dass somit die zweite Steuervorrichtung nur jeweils das Belegt-Flag in jedem Speicherplatz zu überprüfen hat, um festzustellen, ob der Speicherplatz belegt oder frei ist.

Gemäß einer weiteren bevorzugten Weiterbildung weist der Datensatz das Belegt-Flag, eine Kennung für das entsprechende Endgerät der Endgerätegruppe und eine Anzahl R von Steuerbefehlen für das entsprechende Endgerät auf, wobei R eine natürliche Zahl ≥ 1 ist.

Gemäß einer weiteren bevorzugten Weiterbildung ist das Endgerät eine Einspritzvorrichtung für die Kolben eines Motors.

Gemäß einer weiteren bevorzugten Weiterbildung sind die erste Steuervorrichtung und/oder die zweite Steuervorrichtung jeweils als ein Mikrokontroller ausgebildet.

### ZEICHNUNGEN

Ausführungsbeispiele der Erfindung sind in den Zeichnungen dargestellt und in der nachfolgenden Beschreibung näher erläutert.

Es zeigen:
- FIG. 1: ein schematisches Blockschaltbild einer Vorrichtung zur Übertragung von Datensätzen an unabhängige Endgerätegruppen nach dem Stand der Technik;
- FIG. 2: ein schematisches Blockschaltbild eines ersten Ausführungsbeispiels der erfindungsgemäßen Vorrichtung zur Übertragung von Datensätzen an unabhängige Endgerätegruppen, die aus verschiedenen Endgeräten bestehen;
- FIG. 3: ein schematisches Blockschaltbild eines zweiten Ausführungsbeispiels der erfindungsgemäßen Vorrichtung zur Übertragung von Datensätzen an unabhängige Endgerätegruppen, die aus nur einem Endgerät bestehen;
- FIG. 4: ein schematisches Flussdiagramm des erfindungsgemäßen Verfahrens zur Übertragung von Datensätzen an unabhängige Endgerätegruppen;
- FIG. 5: ein schematisches Blockdiagramm eines bevorzugten Ausführungsbeispiels des Datensatzes gemäß der vorliegenden Erfindung; und
- FIG. 6: ein schematisches Blockdiagramm eines bevorzugten Ausführungsbeispiels des Datensatztyps gemäß der vorliegenden Erfindung.

### BESCHREIBUNG DER AUSFÜHRUNGSBEISPIELE

In den Figuren bezeichnen gleiche Bezugszeichen gleiche oder funktionsgleiche Bestandteile.

FIG. 2 zeigt ein schematisches Blockschaltbild eines ersten Ausführungsbeispiels der erfindungsgemäßen Vorrichtung zur Übertragung von Datensätzen 1 an unabhängige Endgerätegruppen 2-i, die aus verschiedenen Endgeräten 2-i-j bestehen. Ohne Einschränkung der Allgemeinheit ist in diesem Ausführungsbeispiel die Anzahl N unabhängiger Endgerätegruppen 2-i drei (N = 3), die Anzahl K der Endgeräte 2-i-j pro Endgerätegruppe 2-i ist zwei (K=2) und demnach die Anzahl der Endgeräte 2-i-j gleich 6 (K*N = 2*3 = 6) und die Anzahl N unabhängiger Ringspeicher 7 gleich 3 (N = 3) gewählt.

Demnach sind in der erfindungsgemäßen Vorrichtung sechs Endgeräte 2-1-1, 2-1-2; 2-2-1, 2-2-2; 2-3-1, 2-3-2 vorgesehen, wobei für jedes der sechs Endgeräte 2-1-1, 2-1-2; 2-2-1, 2-2-2; 2-3-1, 2-3-2 jeweils genau ein vorbestimmter Datensatztyp 3 vorgesehen ist, so dass das jeweilige Endgerät 2-1-1, 2-1-2; 2-2-1, 2-2-2; 2-3-1, 2-3-2 ausschließlich Datensätze 1 des entsprechenden vorbestimmten Datensatztyps 3 empfängt und weiterverarbeitet.

Weiter weist die erfindungsgemäße Vorrichtung eine erste Steuervorrichtung 4 auf, welche die Datensätze 1 der sechs vorbestimmten Datensatztypen 3 berechnet und die Datensätze 1 für die Endgeräte 2-1-1, 2-1-2; 2-2-1, 2-2-2; 2-3-1, 2-3-2 einer jeden Endgerätegruppe 2-1,...,2-3 in der Reihenfolge bereitstellt, in der diese von der entsprechenden Endgerätegruppe 2-1;...; 2-3 und schließlich dem entsprechenden Endgerät der K Endgeräte 2-1-1, 2-1-2; 2-2-1, 2-2-2; 2-3-1, 2-3-2 abgearbeitet werden müssen und welche die entsprechenden Datensätze 1 im entsprechenden Ringspeicher 7-1, ... , 7-3 der jeweiligen Endgerätegruppe 2-1;...; 2-3 speichert. Die erste Steuervorrichtung 4 ist vorzugsweise als ein Mikrokontroller ausgebildet.

Des Weiteren weist die erfindungsgemäße Vorrichtung eine zweite Steuervorrichtung 5 auf, welche einen Speicher 6 aufweist, der in drei unabhängige Ringspeicher 7-1, ..., 7-3 organisiert ist, wobei die zweite Steuervorrichtung 5 die Datensätze 1 der sechs vorbestimmten Datensatztypen 3 empfängt, jeweils den empfangenen Datensatz 1 für ein Endgerät 2-1-1, 2-1-2; 2-2-1, 2-2-2; 2-3-1, 2-3-2 einer Endgerätegruppe 2-1,...,2-3 in einem vorbestimmten Ringspeicher 7-1, ..., 7-3 zwischenspeichert und jeweils den ältesten zwischengespeicherten Datensatz 1 des jeweiligen Ringspeichers 7 an die entsprechende Endgerätegruppe 2-1,..., 2-3 überträgt. Der Ringspeicher 7 ist als ein FIFO-Speicher (First In - First Out) organisiert, so dass der älteste zwischengespeicherte Datensatz 1 derjenige der gespeicherten Datensätze 1 ist, der zuerst wieder ausgegeben wird und danach im Ringspeicher 7-1,...,7-3 wieder gelöscht wird. Der Datensatz 1 weist insbesondere Steuerbefehle für das entsprechende Endgerät 2-1-1,..., 2-3-2 auf. Vorzugsweise ist die zweite Steuervorrichtung 5 als ein Mikrokontroller ausgebildet.

Vorzugsweise speichert die erste Steuervorrichtung 4 jeweils Datensätze 1 von Datensatztypen 3 verschiedener Endgeräte 2-1-1, 2-1-2; 2-2-1, 2-2-2; 2-3-1, 2-3-2 einer Endgerätegruppe 2-1,..., 2-3 in einem gemeinsamen Ringspeicher 7-1, ..., 7-3 zwischen, so dass ein relativer Abstand der Datensätze 1 für verschiedene Endgeräte 2-1-1, 2-1-2; 2-2-1, 2-2-2; 2-3-1, 2-3-2 innerhalb der Endgerätegruppe 2-1,..., 2-3, deren Datensätze 1 in dem gemeinsamen Ringspeicher 7-1,...,7-3 zwischengespeichert werden, maximal ist. Beispielsweise werden in dem Ringspeicher 7-1 ausschließlich die Datensätze 1 für die Endgeräte 2-1-1, 2-1-2, der ersten Endgerätegruppe 2-1 zwischengespeichert. Der relative Abstand zweier Datensätze von verschiedenen Endgeräten 2-1-1, 2-1-2; 2-2-1, 2-2-2; 2-3-1, 2-3-2 einer Endgerätegruppe 2-1,..., 2-3 ist durch den Einsatz des jeweiligen Endgerätes 2 bedingt.

Jeder Ringspeicher 7-1, ..., 7-3 weist eine Anzahl P von Speicherplätzen auf, wobei genau ein Datensatz 1 in genau einem Speicherplatz speicherbar ist, wobei P eine natürliche Zahl ≥ 1 ist.

FIG. 3 zeigt ein schematisches Blockschaltbild eines zweiten Ausführungsbeispiels der erfindungsgemäßen Vorrichtung zur Übertragung von Datensätzen 1 an unabhängige Endgerätegruppen 2-i, bestehend aus jeweils nur einem Endgerät 2-i-j (K = 1). Nach diesem zweiten Ausführungsbeispiel ist die Anzahl N unabhängiger Endgerätegruppen 2-i mit der Anzahl der Endgeräte 2-i-j (K * N = N) und der Anzahl N an Ringspeichern 7 identisch, so dass für jedes einzelne Endgerät 2-i-j ein eigener Ringspeicher 7-1,...,7-3 vorgesehen ist. Ansonsten entspricht das zweite Ausführungsbeispiel nach FIG. 3 dem ersten Ausführungsbeispiel nach FIG. 2.

Ohne Einschränkung der Allgemeinheit ist in dem zweiten Ausführungsbeispiel gemäß FIG. 3 K * N gleich 3 (K = 1, N = 3) gewählt. Ein Vorteil dieser bevorzugten Weiterbildung ist, dass die einzelnen Endgeräte 2-i-j unabhängig voneinander angesteuert werden können. Die Zuordnung von Datensätzen 1 eines bestimmten Endgeräts 2-i-j zu einem bestimmten Ringspeicher 7-i ist nach dem zweiten Ausführungsbeispiel eindeutig, weil im Datensatz 1 die Kennung des Endgeräts 2-i-j entfallen kann. Diese Ausführung erfordert mehr Speicherplatz, da ein Ringspeicher 7 nur für die Ansteuerung eines Endgeräts 2-i-j genutzt wird, dafür wird eine unabhängige Ansteuerung der Endgeräte 2-i-j ermöglicht.

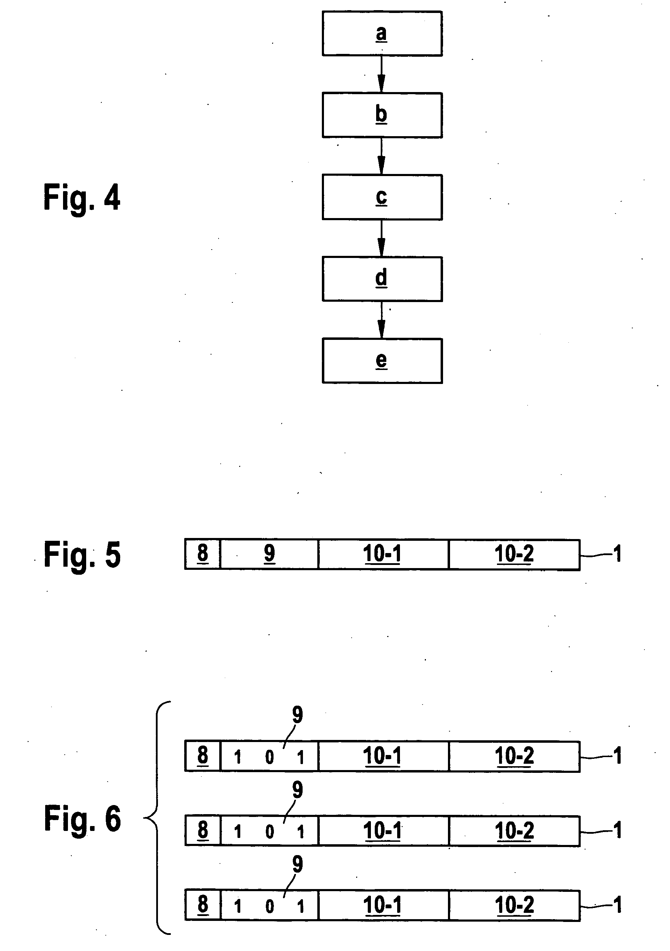

FIG. 4 zeigt ein schematisches Flussdiagramm des erfindungsgemäßen Verfahrens zur Übertragung von Datensätzen 1 an unabhängige Endgerätegruppen 2-i, bestehend aus jeweils mehreren Endgeräten 2-i-j. Das erfindungsgemäße Verfahren weist folgende Verfahrensschritte auf:

### Verfahrensschritt a):

Bereitstellen jeweils genau eines vorbestimmten Datensatztyps 3 für jedes der N*K Endgeräte 2-i-j, so dass das jeweilige Endgerät 2-i-j ausschließlich Datensätze 1 des entsprechenden vorbestimmten Datensatztyps 3 empfängt;

### Verfahrensschritt b):

Berechnen der Datensätze 1 für die N*K Datensatztypen 3;

### Verfahrensschritt c):

Bereitstellen der Datensätze 1 für die abhängigen Endgeräte 2-i-j einer jeden Endgerätegruppe 2-i in der Reihenfolge, in der diese von der entsprechenden Endgerätegruppe 2-i und schließlich dem entsprechenden Endgerät 2-i-j abgearbeitet werden;

### Verfahrensschritt d):

Zwischenspeichern der Datensätze 1, wobei jeweils die Datensätze 1 der abhängigen Endgeräte 2-i-j der jeweiligen Endgerätegruppe 2-i in einem vorbestimmten Ringspeicher 7 einer Mehrzahl N von Ringspeichern 7 zwischengespeichert wird;

### Verfahrensschritt e):

Übertragen des jeweils ältesten zwischengespeicherten Datensatzes 1 des jeweiligen Ringspeichers 7 an das entsprechende Endgerät 2-i-j.

FIG. 5 zeigt ein schematisches Blockdiagramm eines bevorzugten Ausführungsbeispiels des Datensatzes1 gemäß der vorliegenden Erfindung. Der Datensatz 1 weist ein Belegt-Flag 8 auf, welches bei Speicherung des entsprechenden Datensatzes 1 in dem Speicherplatz auf Eins gesetzt wird, um anzuzeigen, dass der entsprechende Speicherplatz belegt ist. Somit hat die zweite Steuervorrichtung 5 ausschließlich das Belegt-Flag 8 in jedem Speicherplatz zu überprüfen, um festzustellen, ob der entsprechende Speicherplatz belegt oder frei ist.

Neben dem Belegt-Flag 8 weist der Datensatz 1 eine Kennung 9 für das entsprechende Endgerät der Endgerätegruppe 2-i und eine Anzahl R von Steuerbefehlen 10; 10-1,10-2 für das entsprechende Endgerät 2-i-j der Endgerätegruppe 2-i auf, wobei R eine natürliche Zahl ≥ 1 ist. In dem bevorzugten Ausführungsbeispiel nach FIG. 5 ist R ohne Einschränkung der Allgemeinheit gleich 2 gewählt. Der Steuerbefehl 10 kann ein beliebiger Steuerbefehl sein und ist z.B. als ein Startwinkel ausgebildet.

FIG. 6 zeigt ein schematisches Blockdiagramm eines bevorzugten Ausführungsbeispiels des Datensatztyps 3 der vorliegenden Erfindung. Die Datensätze 1 eines bestimmten Datensatztyps 3 weisen jeweils dieselbe und eindeutige Kennung 9 für das entsprechende Endgerät 2-i-j auf. In dem bevorzugten Ausführungsbeispiel nach FIG. 6 ist die Kennung für das entsprechende Endgerät 2-i-j mittels der drei Bits "1 0 1" bestimmt.

Obwohl die vorliegende Erfindung vorstehend anhand bevorzugter Ausführungsbeispiele beschrieben wurde, ist sie darauf nicht beschränkt, sondern auf vielfältige Weise modifizierbar. So ist im Besonderen eine Modifikation des Datensatzes denkbar.

**BEZUGSZEICHENLISTE**

| | | |
|---|---|---|
| 1 | | Datensatz |
| 2-i | (i ∈ [1,...,N]) | Endgerätegruppe |
| 3 | | Datensatztyp |
| 4 | | erste Steuervorrichtung |
| 5 | | zweite Steuervorrichtung |
| 6 | | Speicher |
| 7-i | (i ∈ [1,...,N]) | Ringspeicher |
| 8 | | Belegt-Flag |
| 9 | | Kennung |
| 10-k | (k ∈ [1,...,R]) | Steuerbefehl |
| EG | | Endgerätegruppe |
| 1.SV | | erste Steuervorrichtung |
| 2.SV | | zweite Steuervorrichtung |
| Sp | | Speicher |
| 2-i-j | (j ∈ [1,...,K]) | Endgerät |

## Patentansprüche

1. Vorrichtung zur Übertragung von Datensätzen (1) an eine Anzahl N unabhängiger Endgerätegruppen (2-i), wobei eine Endgerätegruppe (2-i) K abhängige Endgeräte (2-i-j) aufweist, wobei N und K natürliche Zahlen ≥ 1 sind, wobei die Vorrichtung aufweist:
- die N Endgerätegruppen (2-i) mit N*K Endgeräten (2-i-j), wobei für jedes der N*K Endgeräte (2-i-j) jeweils genau ein vorbestimmter Datensatztyp (3) vorgesehen ist, so dass das jeweilige Endgerät (2-i-j) ausschließlich Datensätze (1) des entsprechenden vorbestimmten Datensatztyps (3) empfängt und weiterverarbeitet;
- eine erste Steuervorrichtung (4), welche die Datensätze (1) der N*K vorbestimmten Datensatztypen (3) berechnet und die Datensätze (1) für die Endgeräte (2-i-j) einer jeden Endgerätegruppe (2-i) in der Reihenfolge bereitstellt, in der diese von der entsprechenden Endgerätegruppe (2-i) abgearbeitet werden müssen und welche auf einen Speicher (7) zugreift, der mit der gleichen Anzahl N von unabhängigen Ringspeichern (7) organisiert ist, wobei die erste Steuervorrichtung (4) die Datensätze (1) der Endgeräte (2-i-j) der jeweiligen Endgerätegruppe (2-i) in einem vorbestimmten Ringspeicher (7) der Mehrzahl N der als FIFO organisierten Ringspeicher (7) zwischenspeichert; und
- eine zweite Steuervorrichtung (5), welche jeweils den zwischengespeicherten Datensatz (1) des jeweiligen als FIFO organisierten Ringspeichers (7) an das entsprechende Endgerät (2-i-j) der Endgerätegruppe (2-i) überträgt,
**dadurch gekennzeichnet, dass** die erste Steuervorrichtung (4) so ausgebildest ist, dass sie jeweils Datensätze (1) von Datensatztypen (3) für die abhängigen Endgeräte (2-i-j) der gemeinsamen Endgerätegruppe (2-i) in einem gemeinsamen, als FIFO organisierten Ringspeicher (7) zwischenspeichert, so dass ein relativer Abstand der Datensätze (1) für verschiedene Endgeräte (2-i-j), die in dem gemeinsamen, als FIFO organisierten Ringspeicher (7) zwischengespeichert werden, maximal ist, wobei durch eine maximale Beabstandung vorgesehen ist, dass die unterschiedlichen Endgeräte (2-i-j) einer Endgerätegruppe (2-i) ihre Datensätze (1) und die darin beinhalteten Steuerbefehle mit einer maximalen Zeitdifferenz empfangen können.

2. Vorrichtung nach Anspruch 1, **dadurch gekennzeichnet, dass** der Ringspeicher (7) eine Anzahl P von Speicherplätzen aufweist, wobei genau ein Datensatz (1) in genau einem Speicherplatz speicherbar ist, wobei P eine natürliche Zahl ≥ 1 ist.

3. Vorrichtung nach einem oder mehreren der vorstehenden Ansprüche, **dadurch gekennzeichnet, dass** K = 1 ist und die Anzahl N an Endgeräten (2-i-j) und die Anzahl N an Ringspeichern (7) identisch ist, so dass für jeden einzelnen Datensatztyp (3) ein eigener Ringspeicher (7) vorgesehen ist

4. Vorrichtung nach einem oder mehreren der vorstehenden Ansprüche, **dadurch gekennzeichnet, dass** eine Endgerätegruppe (2-i) ein Endgerät (2-i-j) oder mehrere Endgeräte (2-i-j) enthält.

5. Vorrichtung nach einem oder mehreren der vorstehenden Ansprüche, **dadurch gekennzeichnet, dass** ein Belegt-Flag (8) in dem Datensatz (1) vorgesehen ist, welches bei Speicherung des entsprechenden Datensatzes (1) in dem Speicherplatz gesetzt wird, um anzuzeigen, dass der entsprechende Speicherplatz belegt ist, wobei der Datensatz (1) das Belegt-Flag (8), eine Kennung (9) für das entsprechende Endgerät der Endgerätegruppe (2-i) und eine Anzahl R von Steuerbefehlen (10) aufweist, wobei R eine natürliche Zahl ≥ 1 ist.

6. Vorrichtung nach einem oder mehreren der vorstehenden Ansprüche, **dadurch gekennzeichnet, dass** das Endgerät (2-i-j) der Endgerätegruppe (2-i) eine Einspritzvorrichtung für die Kolben eines Motors ist.

7. Vorrichtung nach einem oder mehreren der vorstehenden Ansprüche, **dadurch gekennzeichnet, dass** die erste Steuervorrichtung (4) und/oder die zweite Steuervorrichtung (5) jeweils als ein Mikrokontroller ausgebildet sind.

8. Verfahren zur Übertragung der Datensätze (1) an die Anzahl N unabhängiger Endgerätegruppen (2-i), wobei eine Endgerätegruppe (2-i) K abhängige Endgeräte (2-i-j) aufweist, wobei N und K natürliche Zahlen ≥ 1 sind, mit den folgenden Schritten:
a) Bereitstellen jeweils genau eines vorbestimmten Datensatztyps (3) für jedes der N*K Endgeräte (2-i-j), so dass das jeweilige Endgerät (2-i-j) ausschließlich Datensätze (1) des entsprechenden vorbestimmten Datensatztyps (3) empfängt;
b) Berechnen der Datensätze (1) für die N*K Datensatztypen (3);
c) Bereitstellen der Datensätze (1) für die abhängigen Endgeräte (2-i-j) einer jeden Endgerätegruppe (2-i) in der Reihenfolge, in der diese von der entsprechenden Endgerätegruppe (2-i) und schließlich dem entsprechenden Endgerät (2-i-j) abgearbeitet werden;
d) Zwischenspeichern der bereitgestellten Datensätze (1), wobei jeweils die Datensätze (1) der abhängigen Endgeräte (2-i-j) der jeweiligen Endgerätegruppe (2-i) in einem vorbestimmten als FIFO organisierten Ringspeicher (7) einer gleichen Mehrzahl N von als FIFOs organisierten Ringspeichern (7) zwischengespeichert wird; und
e) Übertragen des jeweils zwischengespeicherten Datensatzes (1) des jeweiligen als FIFO organisierten Ringspeichers (7) an das entsprechende Endgerät (2-i-j),
**dadurch gekennzeichnet,**
**dass** die erste Steuervorrichtung (4) jeweils Datensätze (1) von Datensatztypen (3) für die abhängigen Endgeräte (2-i-j) der gemeinsamen Endgerätegruppe (2-i) in einem gemeinsamen, als FIFO organisierten Ringspeicher (7) zwischenspeichert, so dass ein relativer Abstand der Datensätze (1) für verschiedene Endgeräte (2-i-j), die in dem gemeinsamen, als FIFO organisierten Ringspeicher (7) zwischengespeichert werden, maximal ist, wobei durch eine maximale Beabstandung vorgesehen ist, dass die unterschiedlichen Endgeräte (2-i-j) einer Endgerätegruppe (2-i) ihre Datensätze (1) und die darin beinhalteten Steuerbefehle mit einer maximalen Zeitdifferenz empfangen können.

## Claims

1. Apparatus for transmitting data sets (1) to a number N of independent terminal groups (2-i), a terminal group (2-i) having K dependent terminals (2-i-j), where N and K are natural numbers ≥ 1, the apparatus having:
- the N terminal groups (2-i) with N*K terminals (2-i-j), precisely one predetermined data set type (3) respectively being provided for each of the N*K terminals (2-i-j), with the result that the respective terminal (2-i-j) receives and further processes exclusively data sets (1) of the corresponding predetermined data set type (3);
- a first control apparatus (4) which calculates the data sets (1) of the N*K predetermined data set types (3) and provides the data sets (1) for the terminals (2-i-j) in each terminal group (2-i) in the order in which said data sets have to be processed by the corresponding terminal group (2-i) and accesses a memory (7) which is organized with the same number N of independent ring memories (7), the first control apparatus (4) buffering the data sets (1) for the terminals (2-i-j) in the respective terminal group (2-i) in a predetermined ring memory (7) of the plurality N of ring memories (7) which are organized as a FIFO; and
- a second control apparatus (5) which respectively transmits the buffered data set (1) in the respective ring memory (7) organized as a FIFO to the corresponding terminal (2-i-j) in the terminal group (2-i),
**characterized in that** the first control apparatus (4) is designed in such a manner that it respectively buffers data sets (1) of data set types (3) for the dependent terminals (2-i-j) in the common terminal group (2-i) in a common ring memory (7) organized as a FIFO, with the result that a relative distance between the data sets (1) for different terminals (2-i-j), which are buffered in the common ring memory (7) organized as a FIFO, is at a maximum, a maximum spacing resulting in the different terminals (2-i-j) in a terminal group (2-i) being able to receive their data sets (1) and the control commands contained therein with a maximum time difference.

2. Apparatus according to Claim 1, **characterized in that** the ring memory (7) has a number P of memory locations, precisely one data set (1) being able to be stored in precisely one memory location, where P is a natural number ≥ 1.

3. Apparatus according to one or more of the preceding claims, **characterized in that** K = 1 and the number N of terminals (2-i-j) and the number N of ring memories (7) are identical, with the result that a separate ring memory (7) is provided for each individual data set type (3).

4. Apparatus according to one or more of the preceding claims, **characterized in that** a terminal group (2-i) contains one terminal (2-i-j) or a plurality of terminals (2-i-j).

5. Apparatus according to one or more of the preceding claims, **characterized in that** an occupied flag (8) is provided in the data set (1), which flag is set when storing the corresponding data set (1) in the memory location in order to indicate that the corresponding memory location is occupied, the data set (1) having the occupied flag (8), an identifier (9) for the corresponding terminal in the terminal group (2-i) and a number R of control commands (10), where R is a natural number ≥ 1.

6. Apparatus according to one or more of the preceding claims, **characterized in that** the terminal (2-i-j) in the terminal group (2-i) is an injection apparatus for the pistons of an engine.

7. Apparatus according to one or more of the preceding claims, **characterized in that** the first control apparatus (4) and/or the second control apparatus (5) is/are respectively in the form of a microcontroller.

8. Method for transmitting the data sets (1) to the number N of independent terminal groups (2-i), a terminal group (2-i) having K dependent terminals (2-i-j), where N and K are natural numbers ≥ 1, said method having the following steps of:
a) respectively providing precisely one predetermined data set type (3) for each of the N*K terminals (2-i-j), with the result that the respective terminal (2-i-j) receives exclusively data sets (1) of the corresponding predetermined data set type (3);
b) calculating the data sets (1) for the N*K data set types (3);
c) providing the data sets (1) for the dependent terminals (2-i-j) in each terminal group (2-i) in the order in which said data sets are processed by the corresponding terminal group (2-i) and finally the corresponding terminal (2-i-j);
d) buffering the data sets (1) which have been provided, the data sets (1) for the dependent terminals (2-i-j) in the respective terminal group (2-i) respectively being buffered in a predetermined ring memory (7) organized as a FIFO of the same plurality N of ring memories (7) organized as FIFOs; and
e) transmitting the respectively buffered data set (1) in the respective ring memory (7) organized as a FIFO to the corresponding terminal (2-i-j),
**characterized in that**
the first control apparatus (4) respectively buffers data sets (1) of data set types (3) for the dependent terminals (2-i-j) in the common terminal group (2-i) in a common ring memory (7) organized as a FIFO, with the result that a relative distance between the data sets (1) for different terminals (2-i-j), which are buffered in the common ring memory (7) organized as a FIFO, is at a maximum, a maximum spacing resulting in the different terminals (2-i-j) in a terminal group (2-i) being able to receive their data sets (1) and the control commands contained therein with a maximum time difference.

## Revendications

1. Dispositif de transfert de jeux de données (1) à un nombre N de groupes indépendants de terminaux (2-i), un groupe (2-i) d'appareils terminaux présentant K appareils terminaux (2-i-j) dépendants, N et K étant des nombres naturels ≥ 1, le dispositif présentant :
- les N groupes (2-i) d'appareils terminaux qui comptent N * K appareils terminaux (2-i-j), un type prédéterminé (3) de jeux de données étant prévu pour chacun des N * K appareils terminaux (2-i-j) de telle sorte que chaque appareil terminal (2-i-j) reçoive et traite exclusivement des jeux (1) de données du type (3) de jeux de données prédéterminé correspondant,
- un premier dispositif de commande (4) qui calcule les jeux (1) de données des N * K types (3) de jeux de données prédéterminés et prépare les jeux (1) de données pour les appareils terminaux (2-i-j) de chacun des groupes (2-i) d'appareils terminaux dans la succession dans laquelle ces jeux de données doivent être traités par le groupe (2-i) correspondant d'appareils terminaux et qui a accès à une mémoire (7) organisée avec le même nombre N de mémoires annulaires (7) indépendantes, le premier dispositif de commande (4) conservant temporairement les jeux (1) de données des appareils terminaux (2-i-j) de chaque groupe (2-i) d'appareils terminaux dans une mémoire annulaire (7) prédéterminée qui fait partie des N mémoires annulaires (7) organisées en FIFO,
- un deuxième dispositif de commande (5) qui transfère à l'appareil terminal (2-i-j) correspondant du groupe (2-i) d'appareils terminaux chaque jeu (1) de données conservé temporairement en mémoire dans chaque mémoire annulaire (7) organisée en FIFO,
**caractérisé en ce que**
le premier dispositif de commande (4) est configuré de manière à conserver temporairement en mémoire les jeux (1) de données du type (3) de jeux de données pour les appareils (2-i-j) dépendants du groupe commun (2-i) d'appareils terminaux dans une mémoire annulaire (7) commune organisée en FIFO, de manière à maximiser la distance relative entre les jeux (1) de données prévus pour différents appareils terminaux (2-i-j) et conservés temporairement en mémoire dans la mémoire annulaire (7) commune organisée en FIFO et
**en ce que** la distance maximale permet aux différents appareils terminaux (2-i-j) d'un groupe (2-i) d'appareils terminaux de recevoir leurs jeux (1) de données et les ordres de commande qu'ils contiennent avec une différence de temps maximale.

2. Dispositif selon la revendication 1, **caractérisé en ce que** la mémoire annulaire (7) présente un nombre P d'emplacements de mémoire, chaque jeu de données (1) pouvant être conservé exactement dans un emplacement de mémoire, P étant un nombre naturel ≥ 1.

3. Dispositif selon l'une ou plusieurs des revendications précédentes, **caractérisé en ce que** K = 1 et **en ce que** le nombre N d'appareils terminaux (2-i-j) et le nombre N de mémoires annulaires (7) sont identiques, de telle sorte qu'une mémoire annulaire propre (7) est prévue pour chaque type particulier (3) de jeux de données.

4. Dispositif selon l'une ou plusieurs des revendications précédentes, **caractérisé en ce qu'**un groupe (2-i) d'appareils terminaux contient un appareil terminal (2-i-j) ou plusieurs appareils terminaux (2-i-j).

5. Dispositif selon l'une ou plusieurs des revendications précédentes, **caractérisé en ce qu'**un indicateur d'occupation (8) est prévu dans le jeu (1) de données et est occupé lorsque le jeu (1) de données correspondant est présenté dans l'emplacement de mémoire pour indiquer que l'emplacement de mémoire correspondant est occupé et **en ce que** le jeu (1) de données présente l'indicateur d'occupation (8), une caractéristique (9) de l'appareil terminal correspondant de l'ensemble (2-i) d'appareils terminaux et un nombre R d'ordres de commande (10), R étant un nombre naturel ≥ 1.

6. Dispositif selon l'une ou plusieurs des revendications précédentes, **caractérisé en ce que** l'appareil terminal (2-i-j) du groupe (2-i) d'appareils terminaux est un dispositif d'injection pour le piston d'un moteur.

7. Dispositif selon l'une ou plusieurs des revendications précédentes, **caractérisé en ce que** le premier dispositif de commande (4) et/ou le deuxième dispositif de commande (5) sont tous deux configurés comme microcontrôleurs.

8. Procédé de transfert des jeux (1) de données au nombre N de groupes (2-i) indépendants d'appareils terminaux,
un groupe (2-i) d'appareils terminaux présentant K appareils terminaux dépendants (2-i-j), N et K étant des nombres naturels ≥ 1,
le procédé présentant les étapes suivantes :
a) préparation d'exactement un type (3) prédéterminé de jeux de données pour chacun des N * K appareils terminaux (2-i-j) de telle sorte que chaque appareil terminal (2-i-j) reçoive exclusivement des jeux (1) de données du type correspondant prédéterminé (3) de jeux de données,
b) calcul des jeux (1) de données pour les N * K types (3) de jeux de données,
c) préparation des jeux (1) de données pour les appareils terminaux dépendants (2-i-j) de chaque groupe (2-i) d'appareils terminaux dans la succession dans laquelle ces jeux de données sont traités par le groupe (2-i) correspondant d'appareils terminaux et enfin par l'appareil terminal (2-i-j) correspondant,
d) mise en mémoire temporaire des jeux (1) de données préparés, les jeux (1) de données des appareils terminaux dépendants (2-i-j) de chaque groupe (2-i) d'appareils terminaux étant conservés temporairement en mémoire dans une mémoire annulaire (7) prédéterminée organisée en FIFO et qui fait partie d'un même nombre N de mémoires annulaires (7) organisées en FIFO et
e) transmission de chaque jeu (1) de données conservé temporairement en mémoire dans chaque mémoire annulaire (7) organisée en FIFO à l'appareil terminal (2-i-j) correspondant,
**caractérisé en ce que**
le premier dispositif de commande (4) conserve temporairement en mémoire les jeux (1) de données du type (3) de jeux de données pour les appareils (2-i-j) dépendants du groupe commun (2-i) d'appareils terminaux dans une mémoire annulaire (7) commune organisée en FIFO de manière à maximiser la distance relative entre les jeux (1) de données prévus pour différents appareils terminaux (2-i-j) et conservés temporairement en mémoire dans la mémoire annulaire (7) commune organisée en FIFO et
**en ce que** la distance maximale permet aux différents appareils terminaux (2-i-j) d'un groupe (2-i) d'appareils terminaux de recevoir leurs jeux (1) de données et les ordres de commande qu'ils contiennent avec une différence de temps maximale.
